# EUROPEAN PATENT APPLICATION

(11) **EP 3 731 087 A1**
(43) Date of publication of application: **28.10.2020**
(21) Application number: 19210395.0
(22) Date of filing: 20.11.2019
(51) Int. Cl.: G06F 9/451, G06F 3/0481, G06F 3/0484

(54) **METHOD, APPARATUS AND DEVICE FOR CONTROLLING APPLICATION ICON AND STORAGE MEDIUM**

(30) Priority: 23.04.2019 CN 201910330443
(71) Applicant: Beijing Xiaomi Mobile Software Co., Ltd., Beijing 100085 (CN)
(72) Inventor: JIN, Chunxiao, Beijing, 100085 (CN); XU, Zhiwei, Beijing, 100085 (CN)
(74) Representative: Gevers Patents

(57) **Abstract**

The present disclosure relates to a method, apparatus and device for controlling an application icon and a storage medium. The method includes that: a set hook program is called to detect operation information for reconfiguring a display state of an application icon; responsive to detecting the operation information, display information of a first layer window is reconfigured according to the operation information, the first layer window is configured to display at least one application icon; and a display state of the first layer window is reconfigured according to the display information. Through the technical solutions of the present disclosure, a display state of the application icon may be rapidly and conveniently regulated without influencing execution of another process instruction, and a better desktop background display effect may be achieved.

## Description

### TECHNICAL FIELD

The present disclosure generally relates to a computer technology, and more particularly, to a method, apparatus and device for controlling an application icon and a storage medium.

### BACKGROUND

In a related art, in a Windows system, for obtaining a better using experience of desktop wallpaper of the Windows system, a desktop icon may be hidden. When a user is not required to use an icon on a desktop, no icon but only the desktop wallpaper may be displayed, thereby completely presenting the desktop wallpaper. How to simply and rapidly control a display effect of an application icon on a desktop becomes a technical problem to be solved in the art.

### SUMMARY

For solving the problem in the related art, the present disclosure provides a method, apparatus and device for controlling an application icon, and a storage medium.

According to a first aspect of embodiments of the present disclosure, a method for controlling an application icon is provided, which may include the following operations.

A set hook program is called to detect operation information for reconfiguring a display state of the application icon; display information of a first layer window is reconfigured according to the operation information responsive to detecting the operation information, the first layer window is configured to display at least one application icon; and a display state of the first layer window is reconfigured according to the display information.

The technical solutions provided in the embodiments of the present disclosure may have the following beneficial effects: operation information received by a window is detected through the hook program, and a display state of the window is reconfigured according to the operation information, so that a display effect of an application icon on a desktop may be rapidly switched, for example, the icon is rapidly hidden/displayed, to obtain a better desktop background experience as needed.

Optionally, the operation that the display information of the first layer window is reconfigured according to the operation information responsive to detecting the operation information may include the following operations.

An instruction corresponding to the operation information is injected into a present file management process through the hook program, the file management process is configured to manage the display state of the first layer window; and the display information is reconfigured through the file management process.

Optionally, the at least one application icon may be in a displayed state, the operation information may include operation information for the first layer window, and the operation that the display information of the first layer window is reconfigured according to the operation information responsive to detecting the operation information may include the following operations.

Responsive to detecting the operation information, an operation position corresponding to the operation information is acquired; a display position of each of the at least one application icon is acquired; and when the operation position is different from any display position, the display information is reconfigured according to the operation information.

Optionally, the at least one application icon may be in a hidden state, the operation information may include operation information for a second layer window, the second layer window is a parent window of the first layer window, and the operation that the display information of the first layer window is reconfigured according to the operation information responsive to detecting the operation information may include the following operations.

A time interval between two adjacent single-click operations is acquired; when the time interval is shorter than a preset time interval, the two adjacent single-click operations are determined as a double-click operation; and the display information is reconfigured based on the double-click operation.

Optionally, the operation that the display state of the first layer window is reconfigured according to the display information may include the following operations.

A control interface of a Component Object Model (COM) component is called according to the display information; desktop attribute information is set based on the control interface, the desktop attribute information includes a display effect of the at least one application icon; and the display state is reconfigured according to the desktop attribute information.

Optionally, the operation that the display state of the first layer window is reconfigured according to the display information may include at least one of the following: the at least one application icon is switched from the displayed state to the hidden state according to the display information; the at least one application icon is switched from the hidden state to the displayed state according to the display information; or at least one of transparency, display position and icon size of the at least one application icon is regulated according to the display information.

According to a second aspect of the embodiments of the present disclosure, an apparatus for controlling an application icon is provided, which may include a detection module, a first reconfiguration module and a second reconfiguration module.

The detection module is configured to call a set hook program to detect operation information for reconfiguring a display state of the application icon.

The first reconfiguration module is configured to, responsive to detecting the operation information, reconfigure display information of a first layer window according to the operation information, the first layer window is configured to display at least one application icon.

The second reconfiguration module is configured to reconfigure a display state of the first layer window according to the display information.

Optionally, the first reconfiguration module may include an injection unit and a first reconfiguration unit.

The injection unit is configured to inject an instruction corresponding to the operation information into a present file management process through the hook program, the file management process is configured to manage a display state of a present desktop.

The first reconfiguration unit is configured to reconfigure the display information through the file management process.

Optionally, the at least one application icon may be in a displayed state, the operation information may include operation information for the first layer window, and the first reconfiguration module may include a first acquisition unit, a second acquisition unit and a second reconfiguration unit.

The first acquisition unit is configured to, responsive to detecting the operation information, acquire an operation position corresponding to the operation information.

A second acquisition unit is configured to acquire a display position of each of the at least one application icon.

A second reconfiguration unit is configured to, when the operation position is different from any display position, reconfigure the display information according to the operation information.

Optionally, the at least one application icon may be in a hidden state, the operation information may include operation information for a second layer window, the second layer window is a parent window of the first layer window, and the first reconfiguration module may include a third acquisition unit, a first determination unit and a third reconfiguration unit.

The third acquisition unit is configured to acquire a time interval between two adjacent single-click operations.

The first determination unit is configured to, when the time interval is shorter than a preset time interval, determine the two adjacent single-click operations as a double-click operation.

The third reconfiguration unit is configured to reconfigure the operation information based on the double-click operation.

Optionally, the second reconfiguration module may include a calling unit, a setting unit and a fourth reconfiguration unit.

The calling unit is configured to call a control interface of a COM component according to the display information.

The setting unit is configured to set desktop attribute information based on the control interface, the desktop attribute information includes a display effect of the at least one application icon.

The fourth reconfiguration unit is configured to reconfigure the display state of the first layer window according to the desktop attribute information.

Optionally, the second reconfiguration module may include at least one of a first switching unit, a second switching unit or a regulation unit.

The first switching unit is configured to switch the at least one application icon from the displayed state to the hidden state according to the display information.

The second switching unit is configured to switch the at least one application icon from the hidden state to the displayed state according to the display information.

The regulation unit is configured to regulate at least one of transparency, display position and icon size of the at least one application icon according to the display information.

According to a third aspect of the embodiments of the present disclosure, a device for controlling an application icon is provided, the device may include a processor; and a memory configured to store an instruction executable for the processor. The processor may be configured to execute the operations in the method for controlling the application icon.

According to a fourth aspect of the embodiments of the present disclosure, a non-transitory computer-readable storage medium having instructions stored thereon is provided, the instructions when being executed by a processor of an apparatus for controlling a display of an icon enable the apparatus to execute the operations in the method of controlling the application icon.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for controlling an application icon, according to an exemplary embodiment.
Fig. 2 is a flow chart showing another method for controlling an application icon, according to an exemplary embodiment.
Fig. 3 is a flow chart showing still another method for controlling an application icon, according to an exemplary embodiment.
Fig. 4 is a flow chart showing yet another method for controlling an application icon, according to an exemplary embodiment.
Fig. 5 is a flow chart showing still yet another method for controlling an application icon, according to an exemplary embodiment.
Fig. 6 is a flow chart showing still yet another method for controlling an application icon, according to an exemplary embodiment.
Fig. 7 is a block diagram of an apparatus for controlling an application icon, according to an exemplary embodiment.
Fig. 8 is a block diagram of another apparatus for controlling an application icon, according to an exemplary embodiment.
Fig. 9 is a block diagram of still another apparatus for controlling an application icon, according to an exemplary embodiment.
Fig. 10 is a block diagram of yet another apparatus for controlling an application icon, according to an exemplary embodiment.
Fig. 11 is a block diagram of still yet another apparatus for controlling an application icon, according to an exemplary embodiment.
Fig. 12 is a structure block diagram of a device for controlling an application icon, according to an exemplary embodiment.
Fig. 13 is a structure block diagram of another device for controlling an application icon, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

For better understanding each embodiment of the present disclosure, the following terms will now be explained as follows.

Windows: it is a computer operating system researched and developed by the Microsoft and adopting a graphics mode.

Explore: it is a Windows program manager, or called a file resource manager, configured to manage a Windows graphical shell, including desktop and file arrangement, and if Explore is deleted, a graphical interface of Windows may not be used.

Dynamic Link Library (DLL) file: the DLL file, also called an "application extension", is a software file type. In Windows, many applications are not complete executable files, and they are segmented into some relatively independent DLLs to form DLL files placed in Windows. When a computer executes an application, the DLL files corresponding to the application may be called. Multiple DLL files may be used for an application. A DLL file may also be used for different applications, and such a DLL file is called a shared DLL file.

DLL injection: a DLL is placed in an address space of a process and then the DLL forms a part of the process.

Windows hook: it is a system hook capable of monitoring various event messages in Windows or a process and intercepting and processing the message sent to a target window. Then, a developer may install a self-defined hook in Windows to monitor occurrence of a specific event in Windows to realize a specific function, for example, intercepting input of a keyboard and a mouse, picking words from screen and monitoring log.

SetWindowsHookEx: it is a Windows hook called through Windows and hooked to Windows. Every time when a specific message is sent and before the message reaches a window, SetWindowsHookEx captures the message at first, that is, SetWindowsHookEx controls the message at first and processes or transmits the message to realize a respective function.

COM component: it is a software development technology developed by the Microsoft to make software production of the computer industry more consistent with a human behavior pattern. Under a COM architecture, the developer may develop various dedicated components and then combine them as needed to form a complex application system.

Windows Application Programming Interface (API): it is a protocol for connection of different parts of a software system and a main purpose thereof is to provide a capability in accessing a group of processes without accessing a source code for an application and the developer.

SysListView32: it is called an icon layer window, is a programming control in a Windows 32-bit environment and is configured to present a list, and a desktop icon is usually set in this layer window. A parent window of SysListView32 is SHELLDLL_DefView. Both "SysListView32" and "SHELLDLL_DefView" are window type names under Windows.

ShowWindow function: it is an application calling function configured to set a display state of a specified window.

SW_HIDE: it is one of parameters of the ShowWindow function and is configured to hide a window.

CS_DBLCLKS: it is one of window attributes. A window attribute is configured to specify various information required by creation of a window, including a message processing function of the window, a style of the window, an icon, a mouse, a menu and the like. For a window with the CS_DBLCLKS attribute, double-click information may be sent to a window process by a double-click with the mouse, that is, a mouse double-click operation may be recognized by a window of this type.

WM_LBUTTONDBLCLK: it is a Microsoft WINDOWS window message representing a left button double-click event.

In some embodiments, a desktop icon may be hidden or displayed through an icon hiding/displaying option provided by a right mouse button menu (i.e., a menu option appearing when a left button of a mouse is clicked) on a system desktop, but such a manner is relatively troublesome in operation and a purpose of implementing rapid switching anytime may not be achieved.

In some other embodiments, an operation event, for example, a single-click or double-click with the mouse, may be intercepted by use of a Windows hook, then an icon layer window is found according to a type of the operation event, a ShowWindow function of Windows is called, and then a parameter specifying how to display a window in the ShowWindow function is set to be SW_HIDE, namely the window is hidden. Since a desktop icon is displayed through an icon layer window, the desktop icon, when being required to be hidden, may be hidden by hiding the icon layer window. However, the method of adopting the ShowWindow function is only limited to an operation over a specified window. When all application icons are required to be hidden, it is necessary to select corresponding icon layer windows and call the function. However, the method may not be synchronized with the icon hiding/displaying option provided by the right mouse button menu on the system desktop. After the desktop icons are hidden through the ShowWindow function, the icon hiding/displaying option in the right mouse button menu is still kept in an icon displaying state. That is, the icon hiding/displaying option in the right mouse button menu is presently inconsistent with a practical state of the desktop.

The technical solutions of the present application will further be elaborated below in combination with the drawings and the embodiments.

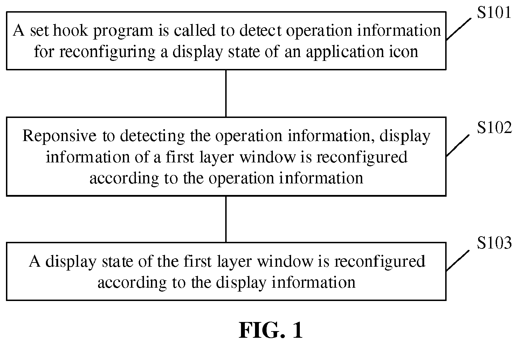

Fig. 1 is a flow chart showing a method for controlling an application icon, according to an exemplary embodiment. As shown in Fig. 1, the method for controlling the application icon is applied to a terminal and includes the following operations.

In S101, a set hook program is called to detect operation information for reconfiguring a display state of the application icon.

Here, the operation information may be user operation information received by a terminal device, for example, a single-click or double-click operation of a mouse, a keyboard operation, a touch operation, etc. The mouse single-click or double-click operation is usually received by a desktop of a display interface of the terminal. For example, an icon layer window SysListView32 under Windows may receive various operation information. All desktop icons are displayed in the icon layer window. The icon layer window, after receiving the operation information, may not execute a corresponding operation such as hiding or displaying responsive to the operation information. Therefore, the hook program may be called to acquire first operation information, and then a respective operation may be specified as a response according to the acquired operation information.

In S102, responsive to detecting the operation information, display information of a first layer window is reconfigured according to the operation information, the first layer window is configured to display at least one application icon.

Here, the hook program, after detecting the operation information, may make a corresponding response. For example, the desktop is reconfigured according to a set type of the operation information and a display state of the present desktop, thereby displaying required display information. Here, the at least one application icon is displayed in the first layer window. For example, SysListView32 under Windows is configured to display an application icon on the desktop. When SysListView32 receives the mouse single-click or double-click operation, the single-click or double-click operation is required to be detected by use of the hook program, and then corresponding control is performed according to the single-click or double-click operation. Here, the display information of the first layer window is reconfigured through the hook program according to the operation information, and a display state of the first layer window is determined by the display information, so that the hook program may reconfigure the display information of the first layer window according to the operation information.

In S103, a display state of the first layer window is reconfigured according to the display information.

After the display information is reconfigured, the first layer window may be displayed according to the new display information. For example, the first layer window is switched from a displayed state to a hidden state or switched from the hidden state to the displayed state, or a display parameter such as transparency of the first layer window may also be regulated. The first layer window is configured to display the application icon, that is, the application icon may be changed according to the display state of the first layer window. Herein, the icon in the first layer window may also be directly regulated, for example, a display position or icon size, etc. of the application icon is regulated.

Through the method in the embodiment, the operation information is detected by use of the set hook program, and a display state of the application icon is correspondingly reconfigured. Therefore, displaying of the desktop may be simply and rapidly regulated according to an operation of a user, convenience is brought to operations, and influence on use of another process is avoided.

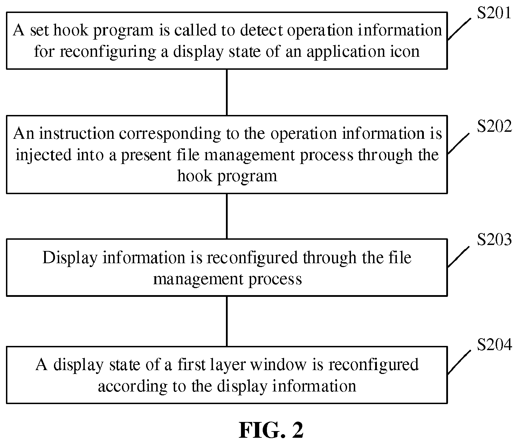

Fig. 2 is a flow chart showing another method for controlling an application icon, according to an exemplary embodiment. As shown in Fig. 2, the method includes the following operations.

In S201, a set hook program is called to detect operation information for reconfiguring a display state of the application icon.

In S202, an instruction corresponding to the operation information is injected into a present file management process through the hook program. The file management process is configured to manage a display state of a first layer window and the first layer window is configured to display at least one application icon.

In S203, display information is reconfigured through the file management process.

In S204, the display state of the first layer window is reconfigured according to the display information.

S202 and S203 form an implementation of the operation in S102 that the display information is reconfigured.

The hook program, after detecting the operation information, may perform corresponding processing. Here, a display state of a desktop, including the display state of the first layer window, is managed by the file management process. There is no instruction required to reconfigure displaying of the first layer window in the present file management process. Therefore, when the hook program injects the set instruction corresponding to the operation information into the present file management process, the instruction of reconfiguring the first layer window is injected into the present file management process. And when the operation information is detected in a running process of the file management process, an operation corresponding to the operation information may be executed to implement reconfiguration of the display information of the first layer window. For example, an Explore process under Windows is configured to manage a Windows graphical shell, including desktop and file arrangement, and after a corresponding DLL instruction is injected into the Explore process, reconfiguration of displaying of a Windows desktop may be implemented.

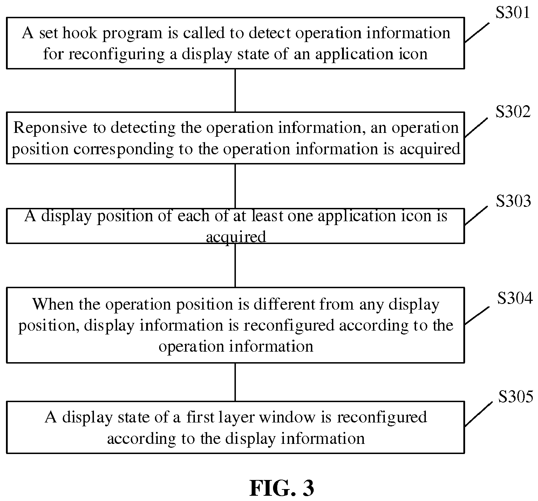

Fig. 3 is a flow chart showing still another method for controlling an application icon, according to an exemplary embodiment. As shown in Fig. 3, the method includes the following operations.

In S301, a set hook program is called to detect operation information for reconfiguring a display state of the application icon.

In S302, responsive to detecting operation information, an operation position corresponding to the operation information is acquired, at least one application icon is in a displayed state, the operation information includes operation information for a first layer window and the first layer window is configured to display the at least one application icon.

In S303, a display position of each of the at least one application icon is acquired.

In S304, when the operation position is different from any display position, display information is reconfigured according to the operation information.

In S305, a display state of the first layer window is reconfigured according to the display information.

S302 to S304 form an implementation of the operation in S102 that the display information is reconfigured when the at least one application icon is in the displayed state.

Here, considering that the application icon is in a normally displayed state, the first layer window is located in an upper layer of a desktop and may receive an instruction of a user. For example, SysListView32 under Windows is displayed in the upper layer of the desktop and may receive a single-click or double-click operation of the user. Since the application icon is displayed in the first layer window, the operation of the user may be for a certain application, and it is necessary to determine an operation intension of the user according to a position.

Positions of desktop icons may be enumerated to confirm the positions of all the desktop icons. When the single-click or double-click operation of the user is located at a certain application icon, it is considered that the operation is for the application corresponding to the application icon and is not an operation for the display state of the application icon. Therefore, the hook program is not required to make a response in such case. When the operation position of the single-click or double-click operation of the user is different from the display position of any application, that is, the operation is located at a blank area of the desktop, it is indicated that the operation is an operation for the display state of the application icon. In such case, the hook program reconfigures the display information according to the operation information.

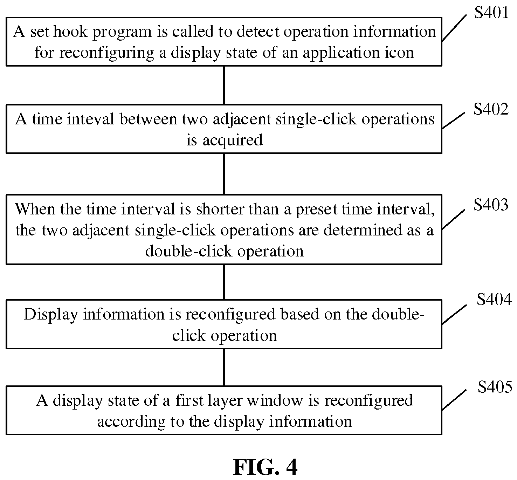

Fig. 4 is a flow chart showing yet another method for controlling an application icon, according to an exemplary embodiment. As shown in Fig. 4, the method includes the following operations.

In S401, a set hook program is called to detect operation information for reconfiguring a display state of the application icon, at least one application is in a hidden state, the operation information includes operation information for a second layer window and the second layer window is a parent window of a first layer window.

In S402, a time interval between two adjacent single-click operations is acquired.

In S403, when the time interval is shorter than a preset time interval, the two adjacent single-click operations are determined as a double-click operation.

In S404, display information is reconfigured based on the double-click operation.

In S405, a display state of the first layer window is reconfigured according to the display information.

S402 to S404 form an implementation of S102 when the at least one application is in the hidden state in the embodiment.

When the application is in the hidden state, the first layer window is in the hidden state. In such case, the parent window of the first layer window is displayed on a desktop. Moreover, when a user operates the desktop, the parent window receives a corresponding operation instruction. For example, when a parent window of SysListView32 under Windows is SHELLDLL_DefView, the window does not have an attribute of capability in recognizing double-click operations. If the first layer window is required to be reconfigured according to a double-click operation, a rule is required to be set through the hook program to recognize the double-click operation.

Here, the time interval between the two adjacent single-click operations is acquired at first, and if the time interval is shorter than the preset time interval, it is indicated that the two single-click operations are continuous, the two single-click operations are determined as the double-click operation and a corresponding reconfiguration operation is executed based on the double-click operation. For example, the first layer window that has been hidden is redisplayed.

Through the method in the embodiment, the double-click operation may be recognized when an application icon is in the hidden state, and the display state of the first layer window is reconfigured according to the double-click operation, thereby changing a display state of the application icon.

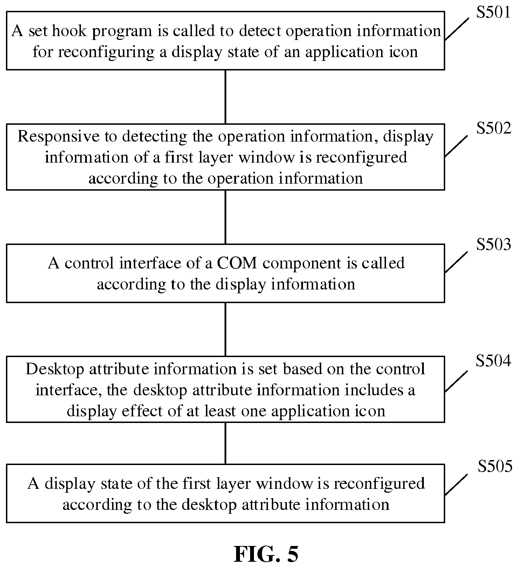

Fig. 5 is a flow chart showing still yet another method for controlling an application icon, according to an exemplary embodiment. As shown in Fig. 5, the method includes the following operations.

In S501, a set hook program is called to detect operation information for reconfiguring a display state of the application icon.

In S502, responsive to detecting the operation information, display information of a first layer window is reconfigured according to the operation information, the first layer window is configured to display at least one application icon.

In S503, a control interface of a COM component is called according to the display information.

In S504, desktop attribute information is set based on the control interface, the desktop attribute information includes a display effect of the at least one application icon.

In S505, a display state of the first layer window is reconfigured according to the desktop attribute information.

S503 to S505 form an implementation of S103 in the embodiment.

Various desktop attributes may be set through the control interface of the COM component, for example, an IfolderView2 interface of the COM component. For example, when it is set that a desktop has an FWF_NOICONS attribute, a first window on the desktop is hidden, and in such case, no desktop icon is displayed on the desktop. For example, after a related instruction of calling the control interface is injected into a present file management process through the hook program and when the operation information is detected, the file management process may execute the instruction to call the control interface and then set the desktop attribute information through the control interface. After the desktop attribute information is modified, the first layer window may be displayed according to the display state corresponding to the desktop attribute information, that is, the display state of the first layer window is reconfigured according to the desktop attribute information. In such a manner, calling the control interface of the COM component to achieve the display effect of the application icon ensures synchronization with a right button desktop menu, brings convenience to operations and avoids conflicts between different operation manners.

In another embodiment, the operation that the display state of the first layer window is reconfigured according to the display information includes at least one of: the at least one application icon is switched from a displayed state to a hidden state according to the display information; the at least one application icon is switched from the hidden state to the displayed state according to the display information; or, at least one of transparency, display position and icon size of the at least one application icon is regulated according to the display information.

The present application is intended to implement a regulation method for an application icon displaying manner, which is not limited to the abovementioned regulation manners and may be set according to a practical requirement. For example, the display position, size, color, dynamic effect or the like of the application icon is regulated in combination with an image of a desktop background.

Through the method in the embodiments, the displaying manner of the application icon may be simply and rapidly switched and may be synchronized with an option in the right button desktop menu.

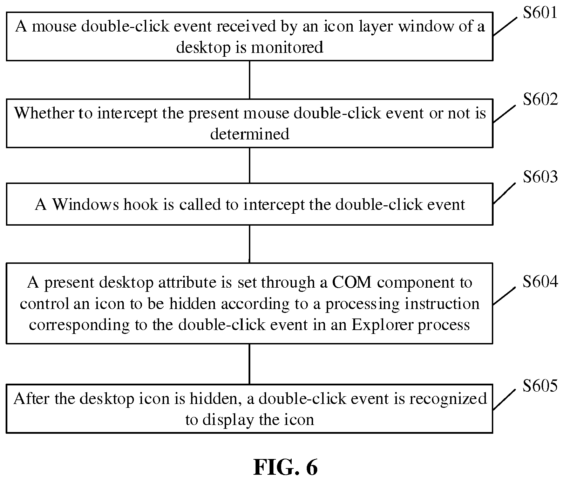

Fig. 6 is a flow chart showing still yet another method for controlling an application icon, according to an exemplary embodiment. As shown in Fig. 6, the method includes the following operations.

In S601, a mouse double-click event received by an icon layer window of a desktop is monitored.

The icon layer window SysListView32 has a CS_DBLCLKS attribute, and in case of a double-click with a mouse, the icon layer window may receive a WM_LBUTTONDBLCLK event, that is, the icon layer window may directly recognize the mouse double-click event.

In S602, whether to intercept the mouse double-click event is determined.

Since the SysListView32 window provided by Windows may recognize the mouse double-click event but may not execute an operation of hiding or displaying an application icon and the like as a response to the event, when it is necessary to hide a desktop icon according to the received mouse double-click event, the mouse double-click event is required to be intercepted by use of a Windows hook, and a corresponding operation is specified after interception.

After the icon layer window receives the double-click operation, present positions of all icons are required to be enumerated. If a click position of the mouse is at a certain icon, it is considered that the double-click event does not occur to trigger a desktop icon hiding operation and thus the double-click event is ignored. When the click position of the mouse is not at any icon, it is confirmed that the Windows hook is required to intercept the double-click event.

In S603, a Windows hook is called to intercept the double-click event.

The icon layer window calls SetWindowsHookEx through a Windows API to inject a DLL of a service processing into an Explorer process, then the mouse double-click event may be intercepted in a running process of the Explorer process, and a set corresponding instruction is executed. For example, the DLL corresponding to the mouse double-click operation is injected into the Explorer process to execute a icon hiding or displaying instruction.

In S604, a present desktop attribute is set through a COM component to control an icon to be hidden according to a processing instruction corresponding to the double-click event in an Explorer process.

Unlike a ShowWindow calling instruction, an IfolderView2 interface of the COM component is called herein. When a desktop icon is required to be hidden, the Explorer process sets that the desktop has an FWF_NOICONS attribute through the interface, and then the desktop icon is hidden.

In S605, after the desktop icon is hidden, a double-click event is recognized to display the icon.

After the desktop icon is hidden, namely the icon layer window SysListView32 where the desktop icon is located is hidden, a window receiving a mouse message is the parent window SHELLDLL_DefView of SysListView32, but the parent window does not have the CS_DBLCLKS attribute and may not directly recognize the double-click event. Therefore, it is necessary to set a sequence of a mouse single-click event to determine whether two single-clicks form a double-click event or not herein. For example, when a distance between positions of two mouse single-click events is less than a set distance threshold value and a time interval between the two mouse single-click events is less than a set time threshold value, the two mouse single-click events are determined as a double-click event.

SHELLDLL_DefView calls SetWindowshookEx through the Windows API to inject the corresponding DLL into the Explorer process. When it is determined that the double-click event occurs, the Explorer process calls the IfolderView2 interface in the COM component to set the desktop attribute, for example, deleting the FWF_NOICONS attribute of the desktop, and in such case, the desktop icon is redisplayed on the desktop , namely the icon layer window is redisplayed.

Through the method, a display state of an icon may be switched through a simple operation of a mouse double-click on the desktop to rapidly hide the desktop icon or display the desktop icon, thereby improving a visual experience of desktop wallpaper. Moreover, whether the icon is display is controlled by calling the interface in the COM component, which may synchronization with an icon hiding/displaying option in a right button desktop menu.

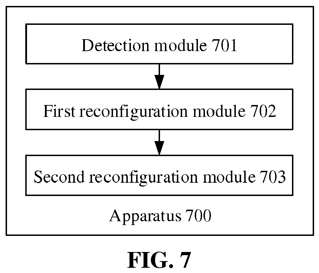

Fig. 7 is a block diagram of an apparatus for controlling an application icon, according to an exemplary embodiment. Referring to Fig. 7, the apparatus 700 includes a detection module 701, a first reconfiguration module 702 and a second reconfiguration module 703.

The detection module 701 is configured to call a set hook program to detect operation information for reconfiguring a display state of the application icon.

The first reconfiguration module 702 is configured to, responsive to detecting the operation information, reconfigure display information of a first layer window according to the operation information, the first layer window is configured to display at least one application icon.

The second reconfiguration module 703 is configured to reconfigure a display state of the first layer window according to the display information.

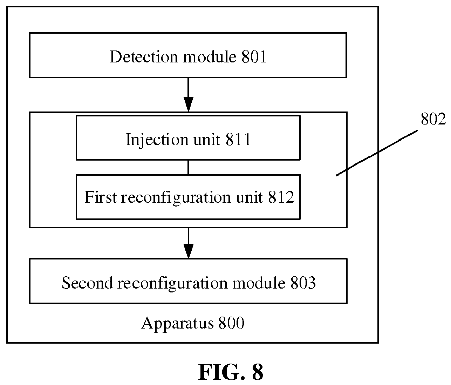

Fig. 8 is a block diagram of another apparatus for controlling an application icon, according to an exemplary embodiment. Referring to Fig. 8, the apparatus 800 includes a detection module 801, a first reconfiguration module 802 and a second reconfiguration module 803. The first reconfiguration module includes an injection unit 811 and a first reconfiguration unit 812.

The injection unit 811 is configured to inject an instruction corresponding to the operation information into a present file management process through the hook program, the file management process is configured to manage a display state of a present desktop; and

The first reconfiguration unit 812 is configured to reconfigure the display information through the file management process.

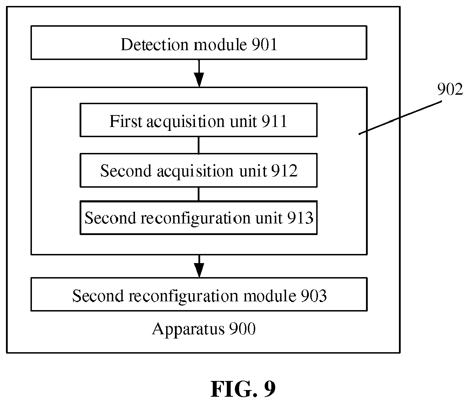

Fig. 9 is a block diagram of still another apparatus for controlling an application icon, according to an exemplary embodiment. Referring to Fig. 9, the apparatus 900 includes a detection module 901, a first reconfiguration module 902 and a second reconfiguration module 903. The at least one application icon is in a displayed state, and the operation information includes operation information for the first layer window.

The first reconfiguration module 902 includes a first acquisition unit 911, a second acquisition unit 912 and a second reconfiguration unit 913.

The first acquisition unit 911 is configured to, responsive to detecting the operation information, acquire an operation position corresponding to the operation information.

The second acquisition unit 912 is configured to acquire a display position of each of the at least one application icon.

The second reconfiguration unit 913 is configured to, when the operation position is different from any display position, reconfigure the display information according to the operation information.

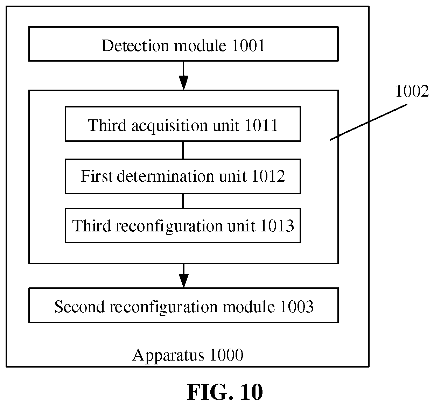

Fig. 10 is a block diagram of yet another apparatus for controlling an application icon, according to an exemplary embodiment. Referring to Fig. 10, the apparatus 1000 includes a detection module 1001, a first reconfiguration module 1002 and a second reconfiguration module 1003. The at least one application icon is in a hidden state, and the operation information includes operation information for a second layer window, the second layer window being a parent window of the first layer window.

The first reconfiguration module 1002 includes a third acquisition unit 1011, a first determination unit 1012 and a third reconfiguration unit 1013.

The third acquisition unit 1011 is configured to acquire a time interval between two adjacent single-click operations.

The first determination unit 1012 is configured to, when the time interval is shorter than a preset time interval, determine the two adjacent single-click operations as a double-click operation.

The third reconfiguration unit 1013 is configured to reconfigure the operation information based on the double-click operation.

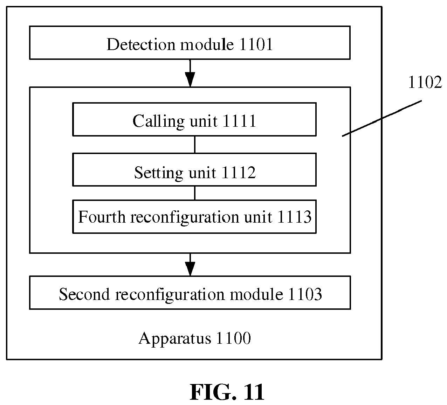

Fig. 11 is a block diagram of still yet another apparatus for controlling an application icon, according to an exemplary embodiment. Referring to Fig. 11, the apparatus 1100 includes a detection module 1101, a first reconfiguration module 1102 and a second reconfiguration module 1103. The second reconfiguration module 1103 includes: a calling unit 1111, a setting unit 1112 and a fourth reconfiguration unit 1113.

The calling unit 1111 is configured to call a control interface of a COM component according to the display information;

The setting unit 1112 is configured to set desktop attribute information based on the control interface, the desktop attribute information including a display effect of the at least one application icon.

The fourth reconfiguration unit 1113 is configured to reconfigure the display state of the first layer window according to the desktop attribute information.

In another embodiment, the second reconfiguration module includes at least one of a first switching unit, a second switching unit or a regulation unit.

The first switching unit is configured to switch the at least one application icon from the displayed state to the hidden state according to the display information.

The second switching unit is configured to switch the at least one application icon from the hidden state to the displayed state according to the display information.

The regulation unit is configured to regulate at least one of transparency, display position and icon size of the at least one application icon according to the display information.

With respect to the apparatus in the above embodiment, the specific manners for performing operations for individual modules therein have been described in detail in the embodiment regarding the method, which will not be elaborated herein.

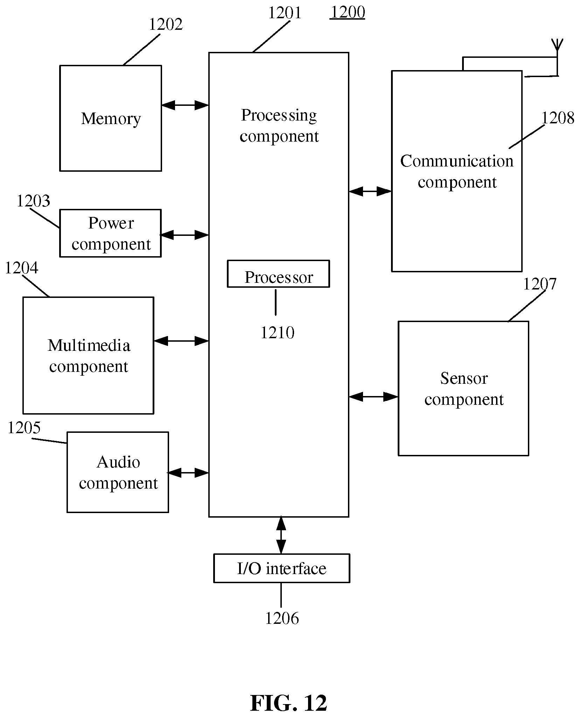

Fig. 12 is a block diagram of a desktop icon control device 1200, according to an exemplary embodiment. For example, the device 1200 may be a mobile phone, a computer, a digital broadcast terminal, a messaging device, a gaming console, a tablet, a medical device, exercise equipment, a personal digital assistant and the like.

Referring to Fig. 12, the device 1200 may include one or more of the following components: a processing component 1201, a memory 1202, a power component 1203, a multimedia component 1204, an audio component 1205, an Input/Output (I/O) interface 1206, a sensor component 1207, and a communication component 1208.

The processing component 1201 typically controls overall operations of the air outlet device 1200, such as the operations associated with display, telephone calls, data communications, camera operations, and recording operations. The processing component 1201 may include one or more processors 1210 to execute instructions to perform all or part of the operations in the abovementioned method. Moreover, the processing component 1201 may further include one or more modules which facilitate interaction between the processing component 1201 and the other components. For instance, the processing component 1201 may include a multimedia module to facilitate interaction between the multimedia component 1204 and the processing component 1201.

The various device components, units, blocks, or portions may have modular configurations, or are composed of discrete components, but nonetheless can be referred to as "modules" in general. In other words, the "components," "modules," "blocks," "portions," or "units" referred to herein may or may not be in modular forms.

The memory 1210 is configured to store various types of data to support the operation of the device 1200. Examples of such data include instructions for any applications or methods operated on the device 1200, contact data, phonebook data, messages, pictures, video, etc. The memory 1202 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 1203 provides power for various components of the device 1200. The power component 1203 may include a power management system, one or more power supplies, and other components associated with generation, management and distribution of power for the device 1200.

The multimedia component 1204 includes a screen providing an output interface between the device 1200 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action but also detect a duration and pressure associated with the touch or swipe action. In some embodiments, the multimedia component 1204 includes a front camera and/or a rear camera. The front camera and/or the rear camera may receive external multimedia data when the device 1200 is in an operation mode, such as a photographing mode or a video mode. Each of the front camera and/or the rear camera may be a fixed optical lens system or have focusing and optical zooming capabilities.

The audio component 1205 is configured to output and/or input an audio signal. For example, the audio component 1205 includes a Microphone (MIC), and the MIC is configured to receive an external audio signal when the device 1200 is in the operation mode, such as a call mode, a recording mode and a voice recognition mode. The received audio signal may further be stored in the memory 1210 or sent through the communication component 1208. In some embodiments, the audio component 1205 further includes a speaker configured to output the audio signal.

The I/O interface 1206 provides an interface between the processing component 1201 and a peripheral interface module, and the peripheral interface module may be a keyboard, a click wheel, a button and the like. The button may include, but not limited to: a home button, a volume button, a starting button and a locking button.

The sensor component 1207 includes one or more sensors configured to provide status assessment in various aspects for the device 1200. For instance, the sensor component 1207 may detect an on/off status of the device 1200 and relative positioning of components, such as a display and small keyboard of the device 1200, and the sensor component 1207 may further detect a change in a position of the device 1200 or a component of the device 1200, presence or absence of contact between the user and the device 1200, orientation or acceleration/deceleration of the device 1200 and a change in temperature of the device 1200. The sensor component 1207 may include a proximity sensor configured to detect presence of an object nearby without any physical contact. The sensor component 1207 may also include a light sensor, such as a Complementary Metal Oxide Semiconductor (CMOS) or Charge Coupled Device (CCD) image sensor, configured for use in an imaging APP. In some embodiments, the sensor component 1207 may also include an acceleration sensor, a gyroscope sensor, a magnetic sensor, a pressure sensor or a temperature sensor.

The communication component 1208 is configured to facilitate wired or wireless communication between the device 1200 and another device. The device 1200 may access a communication-standard-based wireless network, such as a Wireless Fidelity (WiFi) network, a 2nd-Generation (2G) or 3rd-Generation (3G) network or a combination thereof. In an exemplary embodiment, the communication component 1208 receives a broadcast signal or broadcast associated information from an external broadcast management system through a broadcast channel. In an exemplary embodiment, the communication component 1208 further includes a Near Field Communication (NFC) module to facilitate short-range communication. For example, the NFC module may be implemented based on a Radio Frequency Identification (RFID) technology, an Infrared Data Association (IrDA) technology, an Ultra-WideBand (UWB) technology, a Bluetooth (BT) technology or another technology.

In an exemplary embodiment, the device 1200 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including an instruction, such as the memory 1202 including an instruction, and the instruction may be executed by the processor 1210 of the device 1200 to implement the abovementioned method. For example, the non-transitory computer-readable storage medium may be a ROM, a Random Access Memory (RAM), a Compact Disc Read-Only Memory (CD-ROM), a magnetic tape, a floppy disc, an optical data storage device and the like.

According to a non-transitory computer-readable storage medium, an instruction in the storage medium is executed by a processor of a mobile terminal to enable the mobile terminal to execute the method for controlling the desktop icon in the abovementioned embodiments, the method includes the following operations.

First operation information received by a first window is acquired, the first window includes at least one desktop icon; a control interface is called according to the first operation information; and a desktop attribute is set based on the control interface, the desktop attribute includes a display effect of the desktop icon in the first window.

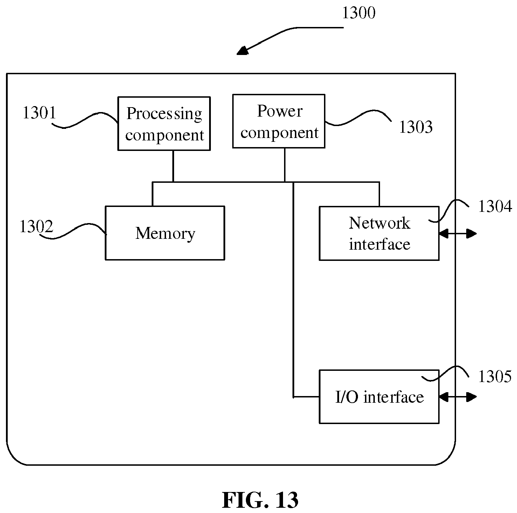

Fig. 13 is a block diagram of a desktop icon control apparatus 1300, according to an exemplary embodiment. For example, the apparatus 1300 may be provided as a device with a processing capability. Referring to Fig. 13, the apparatus 1300 includes a processing component 1301, further including one or more processors, and a memory resource represented by a memory 1302, configured to store an instruction executable for the processing component 1301, for example, an application. The application stored in the memory 1302 may include one or more than one module of which each corresponds to a set of instructions. In addition, the processing component 1301 is configured to execute the instruction to execute the method for controlling the desktop icon in any abovementioned embodiment.

The apparatus 1300 may further include a power component 1303 configured to execute power management of the apparatus 1300, a wired or wireless network interface 1304 configured to connect the apparatus 1300 to a network and an I/O interface 1305. The apparatus 1300 may be operated based on an operating system stored in the memory 1302, for example, Windows ServerTM, Max OS XTM, UnixTM, LinuxTM, FreeBSDTM or the like.

Other implementation solutions of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

In the present disclosure, the terms "installed," "connected," "coupled," "fixed" and the like shall be understood broadly, and can be either a fixed connection or a detachable connection, or integrated, unless otherwise explicitly defined. These terms can refer to mechanical or electrical connections, or both. Such connections can be direct connections or indirect connections through an intermediate medium. These terms can also refer to the internal connections or the interactions between elements. The specific meanings of the above terms in the present disclosure can be understood by those of ordinary skill in the art on a case-by-case basis.

In the description of the present disclosure, the terms "one embodiment," "some embodiments," "example," "specific example," or "some examples," and the like can indicate a specific feature described in connection with the embodiment or example, a structure, a material or feature included in at least one embodiment or example. In the present disclosure, the schematic representation of the above terms is not necessarily directed to the same embodiment or example.

Moreover, the particular features, structures, materials, or characteristics described can be combined in a suitable manner in any one or more embodiments or examples. In addition, various embodiments or examples described in the specification, as well as features of various embodiments or examples, can be combined and reorganized.

In some embodiments, the control and/or interface software or app can be provided in a form of a non-transitory computer-readable storage medium having instructions stored thereon is further provided. For example, the non-transitory computer-readable storage medium can be a ROM, a CD-ROM, a magnetic tape, a floppy disk, optical data storage equipment, a flash drive such as a USB drive or an SD card, and the like.

Implementations of the subject matter and the operations described in this disclosure can be implemented in digital electronic circuitry, or in computer software, firmware, or hardware, including the structures disclosed herein and their structural equivalents, or in combinations of one or more of them. Implementations of the subject matter described in this disclosure can be implemented as one or more computer programs, i.e., one or more portions of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, drives, or other storage devices). Accordingly, the computer storage medium can be tangible.

The operations described in this disclosure can be implemented as operations performed by a data processing apparatus on data stored on one or more computer-readable storage devices or received from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infrastructures.

A computer program (also known as a program, software, software application, app, script, or code) can be written in any form of programming language, including compiled or interpreted languages, declarative or procedural languages, and it can be deployed in any form, including as a stand-alone program or as a portion, component, subroutine, object, or other portion suitable for use in a computing environment. A computer program can, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more portions, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, e.g., an FPGA, or an ASIC.

Processors or processing circuits suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode), or any other monitor for displaying information to the user and a keyboard, a pointing device, e.g., a mouse, trackball, etc., or a touch screen, touch pad, etc., by which the user can provide input to the computer.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components.

The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

Moreover, although features can be described above as acting in certain combinations and even initially claimed as such, one or more features from a claimed combination can in some cases be excised from the combination, and the claimed combination can be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the implementations described above should not be understood as requiring such separation in all implementations, and it should be understood that the described program components and systems can generally be integrated together in a single software product or packaged into multiple software products.

As such, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing can be utilized.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.

Various modifications of, and equivalent acts corresponding to, the disclosed aspects of the example embodiments, in addition to those described above, can be made by a person of ordinary skill in the art, having the benefit of the present disclosure, without departing from the spirit and scope of the disclosure defined in the following claims, the scope of which is to be accorded the broadest interpretation so as to encompass such modifications and equivalent structures.

It should be understood that "a plurality" or "multiple" as referred to herein means two or more. "And/or," describing the association relationship of the associated objects, indicates that there may be three relationships, for example, A and/or B may indicate that there are three cases where A exists separately, A and B exist at the same time, and B exists separately. The character "/" generally indicates that the contextual objects are in an "or" relationship.

In the present disclosure, it is to be understood that the terms "lower," "upper," "under" or "beneath" or "underneath," "above," "front," "back," "left," "right," "top," "bottom," "inner," "outer," "horizontal," "vertical," and other orientation or positional relationships are based on example orientations illustrated in the drawings, and are merely for the convenience of the description of some embodiments, rather than indicating or implying the device or component being constructed and operated in a particular orientation. Therefore, these terms are not to be construed as limiting the scope of the present disclosure.

Moreover, the terms "first" and "second" are used for descriptive purposes only and are not to be construed as indicating or implying a relative importance or implicitly indicating the number of technical features indicated. Thus, elements referred to as "first" and "second" may include one or more of the features either explicitly or implicitly. In the description of the present disclosure, "a plurality" indicates two or more unless specifically defined otherwise.

In the present disclosure, a first element being "on" a second element may indicate direct contact between the first and second elements, without contact, or indirect geometrical relationship through one or more intermediate media or layers, unless otherwise explicitly stated and defined. Similarly, a first element being "under," "underneath" or "beneath" a second element may indicate direct contact between the first and second elements, without contact, or indirect geometrical relationship through one or more intermediate media or layers, unless otherwise explicitly stated and defined.

In the description of the present disclosure, the terms "some embodiments," "example," or "some examples," and the like may indicate a specific feature described in connection with the embodiment or example, a structure, a material or feature included in at least one embodiment or example. In the present disclosure, the schematic representation of the above terms is not necessarily directed to the same embodiment or example.

Moreover, the particular features, structures, materials, or characteristics described may be combined in a suitable manner in any one or more embodiments or examples. In addition, various embodiments or examples described in the specification, as well as features of various embodiments or examples, may be combined and reorganized.

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombinations.

Moreover, although features can be described above as acting in certain combinations and even initially claimed as such, one or more features from a claimed combination can in some cases be excised from the combination, and the claimed combination can be directed to a subcombination or variations of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the implementations described above should not be understood as requiring such separation in all implementations, and it should be understood that the described program components and systems can generally be integrated together in a single software product or packaged into multiple software products.

As such, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing can be utilized.

Some other embodiments of the present disclosure can be available to those skilled in the art upon consideration of the specification and practice of the various embodiments disclosed herein. The present application is intended to cover any variations, uses, or adaptations of the present disclosure following general principles of the present disclosure and include the common general knowledge or conventional technical means in the art without departing from the present disclosure. The specification and examples can be shown as illustrative only, and the true scope and spirit of the disclosure are indicated by the following claims.

## Claims

1. A method for controlling an application icon, **characterized in that** the method comprising:
calling (S101) a set hook program to detect operation information for reconfiguring a display state of the application icon;
reconfiguring (SI02) display information of a first layer window according to the operation information responsive to detecting the operation information, the first layer window being configured to display at least one application icon; and
reconfiguring (S103) a display state of the first layer window according to the display information.

2. The method of claim 1, wherein reconfiguring the display information of the first layer window according to the operation information responsive to detecting the operation information comprises:
injecting (S202)an instruction corresponding to the operation information into a present file management process through the hook program, the file management process being configured to manage the display state of the first layer window; and
reconfiguring (S203) the display information through the file management process.

3. The method of claim 1, wherein the at least one application icon is in a displayed state, the operation information comprises operation information for the first layer window, and
reconfiguring the display information of the first layer window according to the operation information responsive to detecting the operation information comprises:
responsive to detecting the operation information, acquiring an (S302) operation position corresponding to the operation information;
acquiring (S303) a display position of each of the at least one application icon; and
when the operation position is different from any display position, reconfiguring (S304) the display information according to the operation information.

4. The method of claim 1, wherein the at least one application icon is in a hidden state, the operation information comprises operation information for a second layer window, the second layer window being a parent window of the first layer window, and
reconfiguring the display information of the first layer window according to the operation information responsive to detecting the operation information comprises:
acquiring (S402) a time interval between two adjacent single-click operations;
when the time interval is shorter than a preset time interval, determining (S403) the two adjacent single-click operations as a double-click operation; and
reconfiguring (S404) the display information based on the double-click operation.

5. The method of claim 1, wherein reconfiguring the display state of the first layer window according to the display information comprises:
calling (S503) a control interface of a Component Object Model (COM) component according to the display information;
setting (S504) desktop attribute information based on the control interface, the desktop attribute information comprising a display effect of the at least one application icon; and
reconfiguring (S505) the display state according to the desktop attribute information.

6. The method of claim 1, wherein reconfiguring the display state of the first layer window according to the display information comprises at least one of the following:
switching the at least one application icon from the displayed state to the hidden state according to the display information;
switching the at least one application icon from the hidden state to the displayed state according to the display information; or,
regulating at least one of transparency, display position and icon size of the at least one application icon according to the display information.

7. An apparatus for controlling an application icon, **characterized in that** the apparatus comprising:
a detection module (701), configured to call a set hook program to detect operation information for reconfiguring a display state of the application icon;
a first reconfiguration module (702), configured to, responsive to detecting the operation information, reconfigure display information of a first layer window according to the operation information, the first layer window being configured to display at least one application icon; and
a second reconfiguration module (703), configured to reconfigure a display state of the first layer window according to the display information.

8. The apparatus of claim 7, wherein the first reconfiguration module comprises:
an injection unit (811), configured to inject an instruction corresponding to the operation information into a present file management process through the hook program, the file management process being configured to manage a display state of a present desktop; and
a first reconfiguration unit (812), configured to reconfigure the display information through the file management process.

9. The apparatus of claim 7, wherein the at least one application icon is in a displayed state, the operation information comprises operation information for the first layer window, and
the first reconfiguration module comprises:
a first acquisition unit (911), configured to, responsive to detecting the operation information, acquire an operation position corresponding to the operation information;
a second acquisition unit (912), configured to acquire a display position of each of the at least one application icon; and
a second reconfiguration unit (913), configured to, when the operation position is different from any display position, reconfigure the display information according to the operation information.

10. The apparatus of claim 7, wherein the at least one application icon is in a hidden state, the operation information comprises operation information for a second layer window, the second layer window being a parent window of the first layer window, and
the first reconfiguration module comprises:
a third acquisition unit (1011), configured to acquire a time interval between two adjacent single-click operations;
a first determination unit (1012), configured to, when the time interval is shorter than a preset time interval, determine the two adjacent single-click operations as a double-click operation; and
a third reconfiguration unit (1013), configured to reconfigure the operation information based on the double-click operation.

11. The apparatus of claim 7, wherein the second reconfiguration module comprises:
a calling unit (1111), configured to call a control interface of a Component Object Model (COM) component according to the display information;
a setting unit (1112), configured to set desktop attribute information based on the control interface, the desktop attribute information comprising a display effect of the at least one application icon; and
a fourth reconfiguration unit (1113), configured to reconfigure the display state of the first layer window according to the desktop attribute information.

12. The apparatus of claim 7, wherein the second reconfiguration module comprises at least one of:
a first switching unit, configured to switch the at least one application icon from the displayed state to the hidden state according to the display information;
a second switching unit, configured to switch the at least one application icon from the hidden state to the displayed state according to the display information; or,
a regulation unit, configured to regulate at least one of transparency, display position and icon size of the at least one application icon according to the display information.

13. A device for controlling an application icon, comprising:
a processor; and
a memory configured to store instructions executable for the processor,
wherein the processor is configured to execute the operations in the method for controlling the application icon according to any one of the preceding claims 1 to 6.

14. A non-transitory computer-readable storage medium having instructions stored thereon, the instructions when being executed by a processor of an apparatus for controlling a display of an icon enable the apparatus to execute the method of controlling the application icon according to any one of the preceding claims 1 to 6.
